# EUROPÄISCHE PATENTSCHRIFT

(11) **EP 3 875 796 B1**
(45) Veröffentlichungstag und Bekanntmachung des Hinweises auf die Patenterteilung: **05.07.2023**
(21) Anmeldenummer: 21157305.0
(22) Anmeldetag: 16.02.2021
(51) Int. Cl.: F16D 13/24, F16D 13/30

(54) **FORM- UND REIBSCHLÜSSIGE KUPPLUNG**
POSITIVE AND FRICTIONAL COUPLING
ACCOUPLEMENT PAR COMPLÉMENTARITÉ DE FORME ET DE FRICTION

(30) Priorität: 05.03.2020 DE 102020105942
(43) Veröffentlichungstag der Anmeldung: 08.09.2021
(73) Patentinhaber: HOERBIGER Antriebstechnik Holding GmbH, 86956 Schongau (DE)
(72) Erfinder: Binder, Jürgen, 86956 Schongau (DE); Rückinger, Robert, 86956 Schongau (DE); Traut, Christopher, 86956 Schongau (DE); Wang, Lishu, 86956 Schongau (DE); Hoechtl, Michael, 86956 Schongau (DE); Wolf, Jürgen, 86956 Schongau (DE); Fischer, Patrick, 86956 Schongau (DE)
(74) Vertreter: Prinz & Partner mbB

(56) Entgegenhaltungen:
- EP-A1- 2 123 929
- CN-A- 110 608 240
- US-A1- 2020 049 205

## Beschreibung

Die Erfindung betrifft eine normalerweise geschlossene Kupplung, die zum Antreiben eines Aggregats verwendet werden kann. Ein Beispiel für ein solches Aggregat ist ein Luftkompressor, der die Druckluftversorgung des Bremssystems eines Nutzfahrzeugs übernimmt.

Wenn die Kupplung geöffnet wird, kann das Aggregat vom ihm zugeordneten Antrieb getrennt werden. Dies kann beispielsweise aus Effizienzgründen dann erfolgen, wenn es nicht erforderlich ist, das Aggregat zu betreiben.

Die Kupplung wird als normalerweise geschlossen ("NC") ausgeführt, wenn es aus Sicherheitsgründen erforderlich ist, dass das Aggregat mit dem Antrieb gekoppelt ist. Kommt es beispielsweise zu einem Ausfall der Ansteuerung des Mechanismus, mit dem die Kupplung geöffnet werden kann, kehrt diese in jedem Fall in den geschlossenen Zustand zurück. Dadurch ist gewährleistet, dass im obigen Beispiel der Luftkompressor auch im Fehlerfall betrieben wird, sodass ausreichend Druck zur Betätigung der Fahrzeugbremsen zur Verfügung steht.

Ein Beispiel für eine normalerweise geschlossene Kupplung ist eine Reibkupplung, die mittels eines Federpakets in die geschlossene Stellung vorgespannt wird. Um das Aggregat von seinem Antrieb zu trennen, wird der Reibschluss aufgehoben. Umgekehrt wird, wenn das Aggregat mit seinem Antrieb gekoppelt werden soll, der Reibschluss wieder hergestellt, wobei dabei automatisch die Drehzahlen des Aggregats und des Antriebs reibschlüssig synchronisiert werden.

Bei einer Reibkupplung besteht allerdings das Risiko, dass aufgrund von hohen Drehungleichförmigkeiten und auch wechselnden Lasten des Nebenaggregats hohe dynamische Lastüberhöhungen auftreten können, die dazu führen, dass die Reibkupplung durchrutscht. Dies kann im Extremfall dazu führen, dass das Aggregat nicht (mehr) in der gewünschten Weise angetrieben wird und im obigen Beispiel nicht mehr ein ausreichender Luftdruck zur Betätigung der Fahrzeugbremsen bereitgestellt werden kann.

EP 2 123 929 A1 offenbart eine Kopplungsanordnung zur Drehkopplung einer Eingangswelle eines Kompressors in einem Fahrzeug mit einem Antriebsorgan. Die Anordnung umfasst einen mit dem Antriebsorgan zur gemeinsamen Drehung um eine Drehachse gekoppelten ersten Reibelemententräger und einen zweiten Reibelemententräger, mit welchem Reibelemente einer ersten Gruppe und einer zweiten Gruppe drehfest und bezüglich diesem axial bewegbar gekoppelt sind, eine Kraftbeaufschlagungsanordnung, durch welche die Reibelemente der ersten Gruppe und der zweiten Gruppe in Reibwechselwirkung miteinander pressbar sind, und wobei die Kraftbeaufschlagungsanordnung ein bezüglich des zweiten Reibelemententrägers und des Ausgangselements abgestützes und den zweiten Reibelemententräger mit dem zweiten Widerlager axial auf das Ausgangselement mit dem ersten Widerlager zu vorspannendes Kraftbeaufschlagungselement umfasst.

US 2020/049205 A1 offenbart einen Antriebsstrang eines elektrisch angetriebenen Fahrzeugs, der eine reibschlüssige stromlos geschlossene Kupplung mit konischen Reibelementen aufweist, die in einer geschlossenen Stellung paarweise aneinander anliegen und Drehmoment übertragen.

CN 110 608 240 A offenbart eine Kupplungsstruktur und ein Verfahren zu ihrer Verwendung, die Teile wie eine Eingangswelle, einen Kupplungsträger, einen Kolben, eine Feder, eine Kupplung und eine Ausgangswelle integriert. Wenn Leistung von der Eingangswelle eingegeben wird während der Arbeitsölkreislauf nicht mit Hochdrucköl gefüllt ist, drückt die Feder den Kolben, um die Kupplung zu komprimieren, wodurch die Leistung auf die Ausgangswelle zur Leistungsübertragung übertragen wird. Die Kupplung befindet sich in einem normalerweise geschlossenen Zustand.

Die Aufgabe der Erfindung besteht darin, eine Kupplung zu schaffen, mit der ein Aggregat unter allen Umständen zuverlässig angetrieben werden kann und die unter Last geöffnet und geschlossen werden kann.

Zur Lösung dieser Aufgabe ist erfindungsgemäß eine normalerweise geschlossene Kupplung mit einem ersten Rotationselement und einem zweiten Rotationselement vorgesehen, das relativ zum ersten Rotationselement in axialer Richtung verschiebbar ist zwischen einer eingekuppelten und einer ausgekuppelten Stellung, wobei eine erste Federeinrichtung vorgesehen ist, die das zweite Rotationselement mit einer ersten Federkraft in die eingekuppelte Stellung beaufschlagt, in der eine formschlüssig Verbindung zwischen den beiden Rotationselementen besteht, wobei eine Reibungskupplung und eine dieser zugeordnete zweite Federeinrichtung vorgesehen sind, wobei die zweite Federeinrichtung die Reibungskupplung mit einer zweiten Federkraft in eine geschlossene Stellung beaufschlagt, wobei die zweite Federkraft größer ist als die erste Federkraft, wobei ein Ausrückelement vorgesehen ist, mit dem die Reibungskupplung geöffnet werden kann, und wobei das Ausrückelement so angeordnet ist, dass die erste Federeinrichtung, das zweite Rotationselement, die zweite Federeinrichtung und das Ausrückelement in Reihe geschaltet sind. Die Erfindung beruht auf dem Grundgedanken, eine formschlüssige Verbindung mit einer reibschlüssigen Verbindung zu kombinieren. Die reibschlüssige Verbindung dient dazu, im Normalfall das Antriebsdrehmoment zu übertragen. Nur dann, wenn (temporär) Momente wirken, die höher als das über den Reibschluss übertragbare Drehmoment sind, wird das überschüssige Drehmoment mittels des Formschlusses übertragen. Hierdurch ist zuverlässig verhindert, dass die Reibungskupplung durchrutscht. Darüber hinaus dient die Reibungskupplung dazu, die formschlüssige Kupplung beim Öffnen der Kupplung lastfrei zu halten sowie die Drehzahlen der beiden Rotationselemente miteinander zu synchronisieren, wenn die Kupplung aus einem geöffneten in einen geschlossenen Zustand überführt wird. Aufgrund der Federeinrichtungen ist die Kupplung insgesamt jederzeit in einen geschlossenen Zustand beaufschlagt (mit sowohl geschlossener formschlüssiger Verbindung als auch mit geschlossener Reibungskupplung), sodass die Ausfallsicherheit gegeben ist.

Die formschlüssige Verbindung kann durch eine Klauenkupplung gebildet sein, sodass sie in mechanisch einfacher Weise hergestellt werden kann.

Dabei kann vorgesehen sein, dass die Klauenkupplung eine Innenverzahnung an einem der Rotationselemente und eine komplementäre Außenverzahnung am anderen Rotationselement aufweist. Abhängig von den jeweiligen konstruktiven Gegebenheiten können diese Verzahnungen entweder einstückig mit dem entsprechenden Rotationselement ausgeführt oder an einem separaten Bauteil vorgesehen sein, das dann mit dem entsprechenden Rotationselement drehfest verbunden wird.

Die erste Federeinrichtung ist vorzugsweise durch mehrere Spiralfedern gebildet, sodass ein großer Verstellweg und (aufgrund der mehreren Spiralfedern) auch eine Redundanz erhalten wird.

Die zweite Federeinrichtung ist vorzugsweise durch ein Tellerfederpaket gebildet, mit dem eine sehr hohe Federkraft mit geringem Aufwand bereitgestellt werden kann.

Gemäß einer Ausgestaltung der Erfindung ist vorgesehen, dass die Reibungskupplung mindestens eine konische Reibfläche aufweist, so dass aufgrund der sich ergebenden Keilwirkung ein hohes Reibmoment übertragen werden kann.

Die Reibungskupplung kann auch ein Mehrflächen-Reibsystem enthalten, so dass trotz eines kurzen axialen Bauraums ein hohes Reibmoment erhalten wird, insbesondere wenn mehrere konische Reibflächen verwendet werden, welche gleichzeitig mit der Federkraft beaufschlagt werden.

Gemäß einer Ausgestaltung der Erfindung ist vorgesehen, dass die Reibungskupplung eine Sperreinrichtung enthält. Diese gewährleistet, dass die formschlüssige Verbindung erst dann eingerückt werden kann, wenn die Drehzahlen der beiden Rotationselemente miteinander synchronisiert sind. Dementsprechend kann der steuer- oder regelungstechnische Aufwand zum Betätigen der Reibungskupplung minimiert werden.

Im Falle der Verwendung einer Sperreinrichtung enthält die Reibungskupplung einen Synchronring mit einer Blockierfase, die mit einer Sperrfase an einem der Rotationselemente zusammenwirken kann. Solche Gestaltungen sind von Synchronisierungen von Schaltgetrieben für Kraftfahrzeuge allgemein bekannt und stellen daher ein erprobtes Design dar.

Dem Ausrückelement der Reibungskupplung ist vorzugsweise ein Stellkolben zugeordnet, der zusammen mit einem Ausrückergehäuse einen Ausrücker bildet. Dieser Ausrücker kann pneumatisch oder hydraulisch betätigt werden, sodass er bei Bedarf die Reibungskupplung öffnet.

Das erste der Rotationselemente kann ein Kupplungstopf sein, der mit sich axial erstreckenden Mitnehmerfingern versehen ist, wobei zwischen den Mitnehmerfingern eine Zahnscheibe aufgenommen ist, die Teil der formschlüssigen Verbindung ist, und wobei zwischen die Mitnehmerfinger mehrere Mitnehmervorsprünge eines Reibrings der Reibungskupplung eingreifen. Mittels der Mitnehmerfinger kann mit geringem Aufwand eine Geometrie erzeugt werden, die die gewünschte drehfeste Verbindung zwischen einerseits der Zahnscheibe und dem Kupplungstopf und andererseits dem Reibring und dem Kupplungstopf ausbildet.

Das zweite Rotationselement kann als Nabe ausgeführt sein, auf der drehfest, aber axial relativ zueinander verstellbar eine äußere Reibscheibe und eine innere Reibscheibe aufgenommen sind, zwischen denen der Reibring eingreift. Mit dieser Gestaltung kann die Reibungskupplung sehr kompakt auf der Nabe montiert werden.

Die zweite Federeinrichtung ist vorzugsweise zwischen der Nabe und der inneren Reibscheibe wirksam, sodass die zum Schließen der Reibungskupplung nötigen Federkräfte vollständig auf der Nabe abgestützt werden.

Die erste Federeinrichtung stützt sich an der Nabe ab und beaufschlagt diese relativ zum Kupplungstopf in die geschlossene Stellung.

Dabei kann sich auf einer Welle, auf der die Nabe axial verschiebbar, aber drehfest angeordnet ist, ein Widerlager für die erste Federeinrichtung befinden, sodass kein externes Widerlager für die erste Federeinrichtung erforderlich ist.

Gemäß einer Ausgestaltung ist ein Ausrücker für die Reibungskupplung vorgesehen, der auf der Welle in axialer Richtung feststehend angeordnet ist. Somit sind sämtliche Betätigungskräfte der Kupplung in einer abgeschlossenen Baugruppe abgestützt.

Der Kupplungstopf ist vorzugsweise mittels eines Wälzlagers drehbar auf der Welle gelagert, sodass seine Position relativ zur Nabe präzise definiert ist.

Die Erfindung wird nachfolgend anhand zweier Ausführungsformen beschrieben, die in den beigefügten Zeichnungen dargestellt sind. In diesen zeigen:
- Figur 1 in einer geschnittenen Teilansicht eine Kupplung gemäß einer ersten Ausführungsform im geschlossenen Zustand;
- Figur 2 die Kupplung gemäß der ersten Ausführungsform im geschlossenen Zustand in einer perspektivischen, geschnittenen Ansicht;
- Figur 3 die Kupplung von Figur 2 in einer weiteren perspektivischen, geschnittenen Ansicht;
- Figur 4 die Kupplung gemäß der ersten Ausführungsform in einem Querschnitt und im geschlossenen Zustand, wobei einige Bauteile der besseren Übersichtlichkeit halber nicht gezeigt sind;
- Figur 5 eine Ansicht entsprechend derjenigen von Figur 4, wobei die Kupplung in einem Zwischenzustand gezeigt ist;
- Figur 6 die Kupplung von Figur 4 in einem geöffneten Zustand;
- die Figuren 7a bis 7c ein Federdiagramm der erfindungsgemäßen Kupplung in verschiedenen Zuständen;
- Figur 8 eine Kupplung gemäß einer zweiten Ausführungsform in einer perspektivischen, geschnittenen Ansicht in einem Zwischenzustand;
- Figur 9 in einer Schnittansicht der Kupplung gemäß der zweiten Ausführungsform in einem geöffneten Zustand;
- Figur 10 ein Detail der Kupplung gemäß der zweiten Ausführungsform im geöffneten Zustand;
- Figur 11 in einer Schnittansicht der Kupplung gemäß der zweiten Ausführungsform in einem Zwischenzustand;
- Figur 12 ein Detail der Kupplung gemäß der zweiten Ausführungsform im Zwischenzustand;
- Figur 13 eine perspektivische Ansicht der Kupplung gemäß der zweiten Ausführungsform in einem Zwischenzustand;
- Figur 14 in einer Ansicht entsprechend derjenigen von Figur 9 die Kupplung gemäß der zweiten Ausführungsform in einem Zwischenzustand;
- Figur 15 eine Ansicht ähnlich derjenigen von Figur 10, wobei sich die Kupplung in einem Zwischenzustand befindet;
- Figur 16 eine Ansicht entsprechend derjenigen von Figur 9, wobei sich die Kupplung in einem geschlossenen Zustand befindet; und
- Figur 17 eine Ansicht entsprechend derjenigen von Figur 10, wobei sich die Kupplung in einem geschlossenen Zustand befindet.

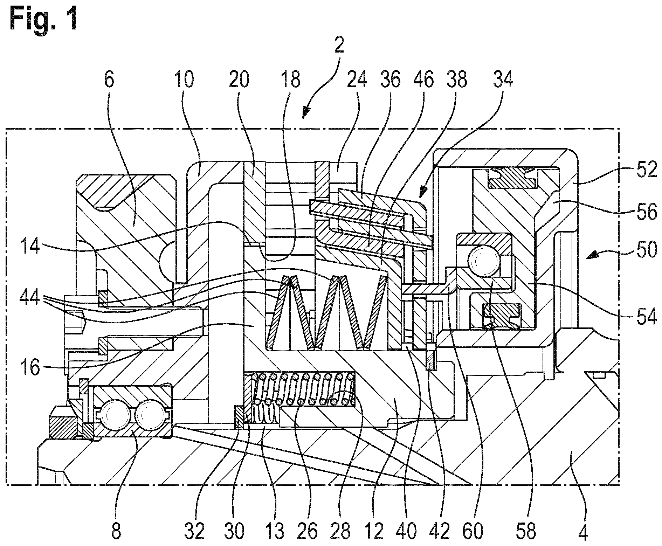

In Figur 1 ist eine Kupplung 2 gezeigt, die dazu dient, im geschlossenen Zustand ein Drehmoment zu einer Welle 4 (hier einer Welle eines Kompressors) zu übertragen, das von einer Antriebsscheibe 6 stammt. Das Drehmoment könnte grundsätzlich auch in umgekehrter Richtung übertragen werden.

Wenn die Kupplung 2 geöffnet ist, sind die beiden Bauteile 4, 6 voneinander entkoppelt, sodass kein Drehmoment (abgesehen von einem eventuellen Restschleppmoment) übertragen wird.

Die Kupplung 2 weist zwei Rotationselemente 10, 12 auf, von denen eines hier als Kupplungstopf 10 und das andere als Nabe 12 ausgeführt sind. Der Kupplungstopf 10 ist mittels eines Wälzlagers 8 frei drehbar auf der Welle 4 gelagert.

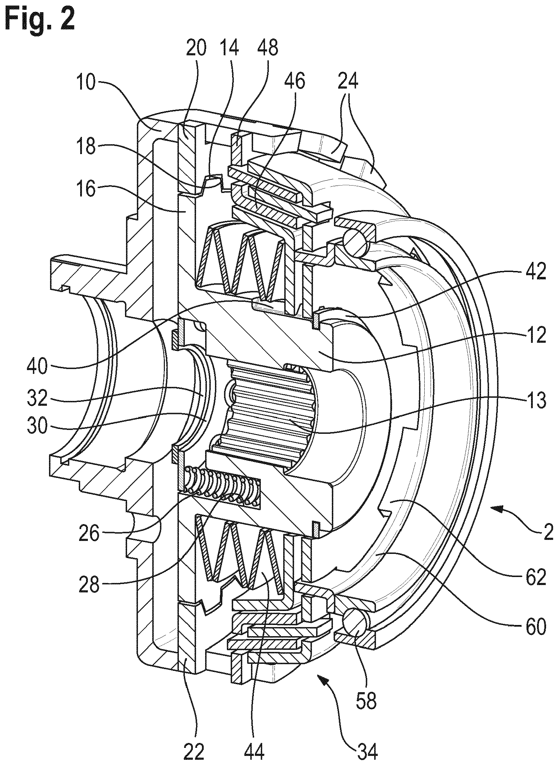

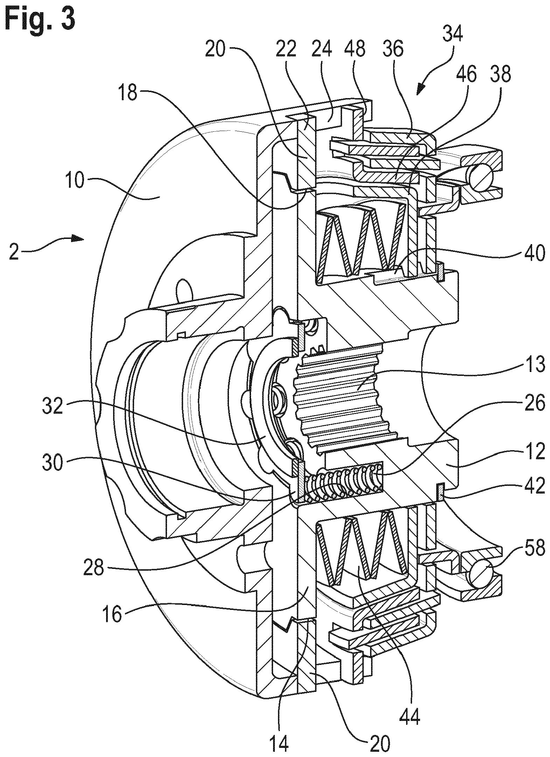

Die Nabe 12 ist in Umfangsrichtung drehfest (siehe die Keilwellenverzahnung 13 insbesondere in den Figuren 2 und 3), jedoch in axialer Richtung verschiebbar auf der Welle 4 gelagert.

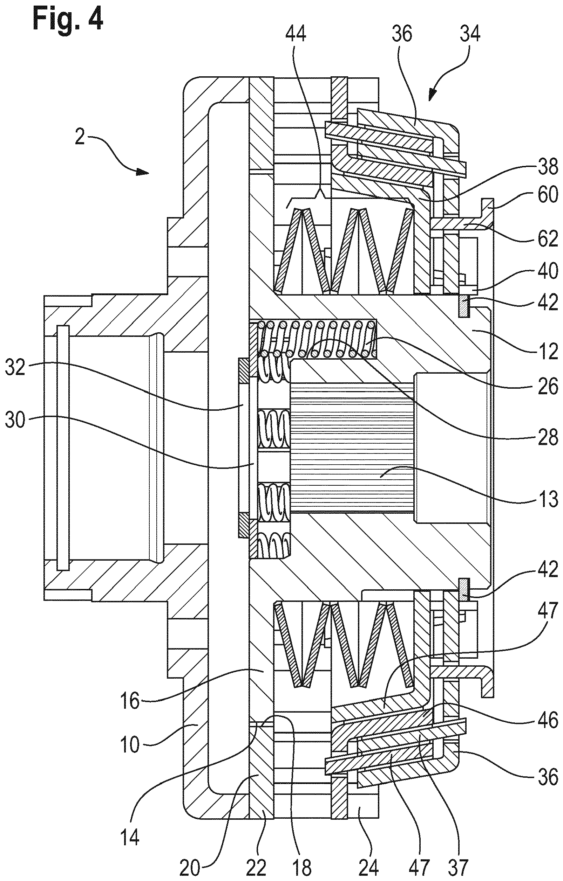

In dem in den Figuren 1 bis 4 gezeigten Zustand liegt eine formschlüssige Verbindung zwischen dem Kupplungstopf 10 und der Nabe 12 vor, sodass diese drehfest miteinander gekoppelt sind. Die formschlüssige Verbindung ist hier gebildet durch eine Klauenkupplung, die ineinandergreifende Zähne am Kupplungstopf 10 und der Nabe 12 aufweist.

Konkret weist die Nabe 12 eine Außenverzahnung 14 auf, die hier einstückig mit einem Bund 16 der Nabe 12 ausgeführt ist.

Der Kupplungstopf 10 weist eine Innenverzahnung 18 auf, die am Innenumfang einer Zahnscheibe 20 ausgebildet ist. Diese ist drehfest mit dem Kupplungstopf 10 verbunden.

Die Verzahnungen 14, 18 können mit einer Dachverzahnung oder ähnlichen Schrägflächen versehen sein, um das axiale Einrücken zu erleichtern.

Die Zahnscheibe 20 weist an ihrem außenliegenden Umfangsrand eine Vielzahl von Mitnehmervorsprüngen 22 auf, die jeweils im Zwischenraum zwischen benachbarten Mitnehmerfingern 24 angeordnet sind, die sich ausgehend vom Außenumfang des Kupplungstopfes 10 in axialer Richtung erstrecken.

Das Drehmoment wird hier über den Formschluss vom Kupplungstopf 10, die Mitnehmervorsprünge 22, die Innenverzahnung 18, die Außenverzahnung 14 und die Nabe 10 zur Welle übertragen. Grundsätzlich könnte das Drehmoment hier auch in umgekehrter Richtung übertragen werden. Zur Umkehr der Richtung der Drehmomentübertragung kann es auch bei Lastwechseln oder dynamischen Lastschwankungen kommen.

In dem in den Figuren 1 bis 4 gezeigten Zustand, in welchem der Formschluss zwischen der Nabe und dem Kupplungstopf besteht, wird die Nabe 10 von einer ersten Federeinrichtung beaufschlagt, die hier durch mehrere Spiralfedern 26 gebildet ist. Die Spiralfedern 26 sind über den größten Teil ihrer Länge in einem Sackloch 28 der Nabe 12 aufgenommen, an deren Boden sie sich abstützen. Das entgegengesetzte Ende der Spiralfedern 26 stützt sich an einer Widerlagerscheibe 30 ab, die in axialer Richtung mittels eines Sicherungsrings 32 auf der Welle 4 festgelegt ist.

Die Spiralfedern 26 drücken die Nabe 12 also vom Boden des Kupplungstopfes 10 weg, also aus dem Kupplungstopf 10 heraus in die Stellung, in der die Außenverzahnung der Nabe 12 in die Innenverzahnung des Kupplungstopfes 10 eingreift.

Teil der Kupplung 2 ist auch eine Reibungskupplung 34, die zwischen dem Kupplungstopf 10 und der Nabe 12 wirksam ist.

Die Reibungskupplung 34 kann grundsätzlich in unterschiedlicher Weise konstruktiv ausgeführt sein. Sie dient dazu, das Drehmoment zwischen den beiden Rotationselementen 10, 12 zu übertragen. Die Reibungskupplung 34 dient weiterhin dazu, die Drehzahlen der beiden Rotationselemente 10, 12 miteinander zu synchronisieren, wenn die drehfeste Verbindung zwischen diesen beiden Bauteilen hergestellt werden soll, während eine Drehzahldifferenz zwischen diesen beiden Bauteilen besteht. Ein Anwendungsfall hierfür ist, dass die Kupplung 2 dafür dient, einen Kompressor anzutreiben, der im laufenden Betrieb zu- oder abgeschaltet werden soll.

Im gezeigten Ausführungsbeispiel weist die Reibungskupplung 34 mehrere konische Reibflächen auf. Konkret wird ein Mehrflächen-Reibsystem verwendet.

Auf der Seite der Nabe 12 weist die Reibungskupplung 34 eine äußere Reibscheibe 36 und eine innere Reibscheibe 38 auf.

Die beiden Reibscheiben 36, 38 sind drehfest auf der Nabe 12 angeordnet (siehe die Keilwellenverzahnung 40).

Die äußere Reibscheibe 36 ist in axialer Richtung mittels eines Sicherungsrings 42 auf der Nabe 12 fixiert. Die innere Reibscheibe 38 wird von einer zweiten Federeinrichtung in axialer Richtung gegen die äußere Reibscheibe 36 gedrückt. Im gezeigten Ausführungsbeispiel ist die zweite Federeinrichtung durch ein Paket aus mehreren Tellerfedern 44 gebildet. Diese stützen sich zwischen dem Bund 16 der Nabe 12 und der inneren Reibscheibe 38 ab.

Die vom Tellerfederpaket 44 in axialer Richtung ausgeübte Kraft ist sehr viel größer als die in axialer Richtung bereitgestellte Kraft der Spiralfedern 26.

Auf der Seite des Kupplungstopfes 10 weist die Reibungskupplung einen Reibring 46 auf, der drehfest mit dem Kupplungstopf 10 gekoppelt ist und sich in den Raum zwischen den beiden Reibscheiben 36, 38 hineinerstreckt.

Zur drehfesten Verbindung zwischen dem Reibring 46 und dem Kupplungstopf 10 weist der Reibring 46 an seinem Außenumfang eine Vielzahl von Mitnehmervorsprüngen 48 auf, die sich zwischen die Mitnehmerfinger 24 des Kupplungstopfes 10 erstrecken.

Um die Anzahl der wirksamen Reibflächen zu erhöhen, weist die äußere Reibscheibe 36 eine drehfest mit ihr gekoppelte Neben-Reibscheibe 37 auf, und der Reibring 46 weist einen drehfest mit ihm gekoppelten Neben-Reibring 47 auf. Somit liegen insgesamt vier Reibflächen-Paare vor.

Die Reibungskupplung 34 ist vom Tellerfederpaket 44 in eine geschlossene Stellung beaufschlagt, in der die innere Reibscheibe 38 so in Richtung der äußeren Reibscheibe 36 gedrückt wird, dass der Reibring 46 sowie der Neben-Reibring 47 und auch die Neben-Reibscheibe 37 zwischen ihnen verspannt werden.

Um die Reibungskupplung 34 zu öffnen, ist ein Ausrücker 50 vorgesehen, der in einem in axialer Richtung feststehend Gehäuse montiert ist.

Der Ausrücker 50 weist ein Ausrückergehäuse 52 auf, in dem ein Stellkolben 54 angeordnet ist. Zwischen diesem und dem Ausrückergehäuse ist ein Druckraum 56 gebildet, der so unter Pneumatik- oder Hydraulikdruck gesetzt werden kann, dass der Stellkolben 54 zur Reibungskupplung 34 hin beaufschlagt wird. Diese Bewegung kann über ein Wälzlager 58 auf ein Ausrückelement 60 übertragen werden, das hier als Ring mit Ausrückfingern 62 ausgeführt ist.

Die Ausrückfinger 62 erstrecken sich durch geeignete Öffnungen der äußeren Reibscheibe 36, sodass sie an der inneren Reibscheibe 38 anliegen und diese entgegen der Wirkung des Tellerfederpakets 44 von der äußeren Reibscheibe weg verstellen können.

In den Figuren 1 bis 4 ist die Kupplung 2 in einem vollständig geschlossenen Zustand gezeigt, in welchem sowohl die Formschlussverbindung zwischen dem Kupplungstopf 10 und der Nabe 12 als auch der Reibschluss der geschlossenen Reibungskupplung 34 vorliegen. In diesem Zustand kann ein Drehmoment zwischen den beiden Rotationselementen 10, 12 übertragen werden, wobei dieses Drehmoment dann, wenn das von der Reibungskupplung übertragbare Drehmoment überschritten wird, durch die Formschlussverbindung übertragen wird. Es ist keinerlei äußere Ansteuerung erforderlich, um diesen Zustand aufrechtzuerhalten, da die Spiralfedern 26 und die Tellerfedern 44 dafür sorgen, dass die Formschlussverbindung aufrechterhalten und die Reibungskupplung 34 geschlossen bleibt.

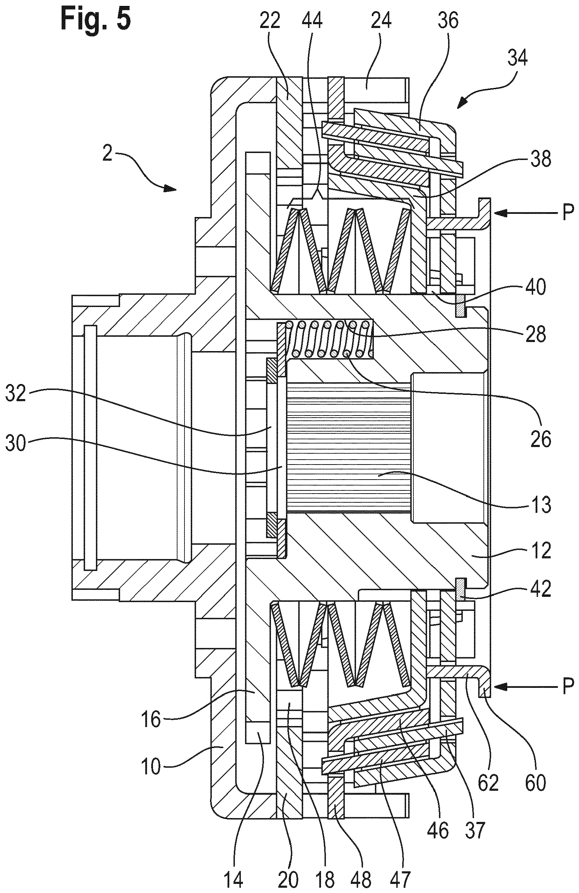

Wenn die Kupplung 2 geöffnet werden soll, wird über den Ausrücker 50 das Ausrückelement 60 in der Richtung des Pfeils P von Figur 5 verstellt, wodurch zunächst die Nabe 12 relativ zum Kupplungstopf 10 in axialer Richtung verschoben wird, wodurch die formschlüssige Verbindung gelöst wird; der Bund 16 der Nabe 12 erstreckt sich nicht mehr in derselben Ebene wie die Zahnscheibe 20.

Die Nabe 12 liegt in diesem Zustand an der Widerlagerscheibe 30 an.

In diesem Zwischenzustand ist die Reibungskupplung 34 weiterhin geschlossen. Dies liegt daran, dass die von der ersten Federeinrichtung (Spiralfedern 26) bereitgestellte axiale Kraft geringer ist als die von der zweiten Federeinrichtung (Tellerfederpaket 44) bereitgestellte Kraft. Solange die Spiralfedern nachgeben können, können die Tellerfedern 44 als starr angesehen werden. Ein eventuelles Drehmoment zwischen dem Kupplungstopf 10 und der Nabe 12 wird also weiterhin über die Reibungskupplung 34 übertragen, während die formschlüssige Verbindung kraftfrei gelöst werden kann.

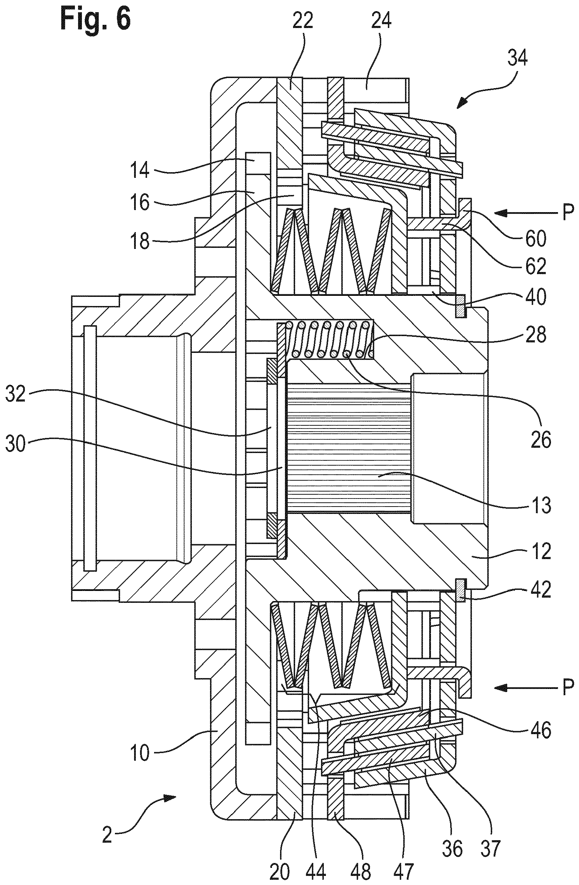

Wenn in diesem Zustand die auf das Ausrückelement 60 ausgeübte Kraft weiter erhöht wird, wird auch die Rückstellkraft des Tellerfederpakets 44 überwunden, wodurch die innere Reibscheibe 38 in axialer Richtung von der äußeren Reibscheibe 36 wegbewegt wird. Hierdurch wird die Reibungskupplung 34 geöffnet (siehe Figur 6). In diesem Zustand ist der Drehmomentfluss zwischen dem Kupplungstopf 10 und der Nabe 12 unterbrochen.

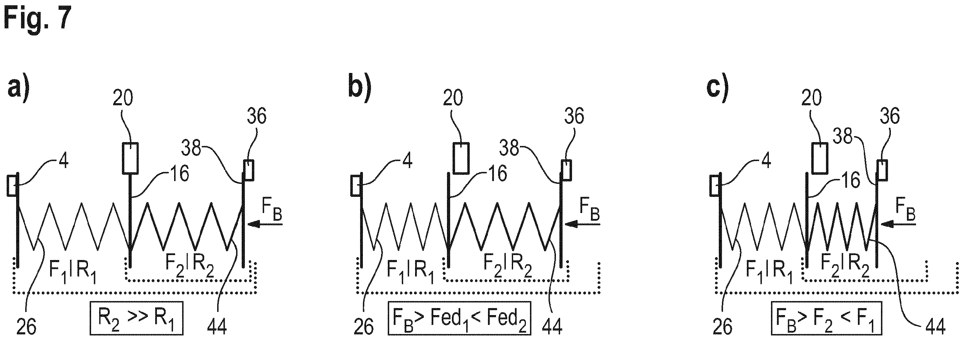

In den Figuren 7a bis 7c ist der Vorgang des Öffnens der Kupplung 2 schematisch dargestellt.

In Figur 7a ist die Kupplung 2 im geschlossenen Zustand gezeigt. Es ist auch zu sehen, dass ausgehend von der Welle 4 (konkret der Widerlagerscheibe 30) die erste Federeinrichtung 26, die Nabe 12 mit dem Bund 16, die zweite Federeinrichtung 44, die innere Reibscheibe 38 und das Ausrückelement 60 (symbolisiert durch die Betätigungskraft F_{B}) in Reihe angeordnet sind.

Die Steifigkeit der zweiten Federeinrichtung 44 ist sehr viel größer als die Federsteifigkeit der ersten Federeinrichtung 26. Außerdem sind die entsprechenden Federn so vorgespannt, dass die im Ausgangszustand bereitgestellte Vorspannkraft der zweiten Federeinrichtung größer ist als die Vorspannkraft der ersten Federeinrichtung.

Um die Kupplung 2 zu öffnen, wird zunächst eine Betätigungs- oder Ausrückkraft F_{B} aufgebracht, die größer ist als die von der ersten Federeinrichtung 26 aufgebrachte Kraft Fi. Da die Kraft der zweiten Federeinrichtung größer ist als die Kraft der ersten Federeinrichtung, kann die zweite Federeinrichtung hier als starrer axialer Durchtrieb angenommen werden, was dazu führt, dass die Reibungskupplung 34 geschlossen bleibt, während die Nabe 12 relativ zum Kupplungstopf 10 verstellt wird. Dementsprechend wird die Formschlussverbindung zwischen dem Bund 16 und der Zahnscheibe 20 geöffnet.

Wenn in einem zweiten Schritt dann eine Ausrückkraft F_{B} aufgebracht wird, die größer ist als die von der zweiten Federeinrichtung bereitgestellte Federkraft F₂, wird die innere Reibscheibe 38 von der äußeren Reibscheibe 36 entfernt, wodurch die Reibungskupplung 34 öffnet (siehe Figur 7c).

Um die Kupplung 2 ausgehend vom geöffneten Zustand zu schließen, wird zunächst die auf das Ausrückelement 60 aufgebrachte Ausrückkraft so weit verringert, dass sie kleiner ist als die Federkraft der zweiten Federeinrichtung. Dies bewirkt, dass sich das Tellerfederpaket 44 entspannen kann (und dementsprechend die Reibungskupplung 34 geschlossen wird), während weiterhin die Spiralfedern 26 komprimiert bleiben und die Nabe 12 in Anlage an der Widerlagerscheibe 30 verbleibt. Durch die sich schließende Reibungskupplung 34 werden die Drehzahlen der Nabe 12 und des Kupplungstopfs 10 aneinander angeglichen (falls eine Drehzahldifferenz vorliegt).

Wenn die Reibungskupplung 34 vollständig geschlossen ist und die Ausrückkraft unter die Kraft absinkt, die von den Spiralfedern 26 ausgeübt wird, können die Spiralfedern 26 die Nabe 12 in axialer Richtung verschieben (bezogen auf die Figuren nach rechts), wodurch die Außenverzahnung 14 am Bund 16 in die Innenverzahnung 18 der Zahnscheibe 22 eingreift. Hierdurch ist der Formschluss wiederhergestellt. Die Kupplung 2 gewährleistet in diesem Zustand eine zuverlässige Drehmomentübertragung auch dann, wenn das zu übertragende Drehmoment oberhalb des Drehmoments liegt, das von der Reibungskupplung 34 reibschlüssig übertragen werden kann.

Der Vorgang insbesondere des Einrückens der Kupplung kann entweder zeitgesteuert erfolgen (indem der Druckraum 56 über eine Blende oder Drosselstelle geeignet entlüftet wird, sodass die Reibungskupplung 34 automatisch ausreichend langsam schließt, um die Drehzahlen der beiden Rotationselemente 10, 12 synchronisieren zu können) oder aktiv gesteuert unter Überwachung der Drehzahlen der beiden Rotationselemente.

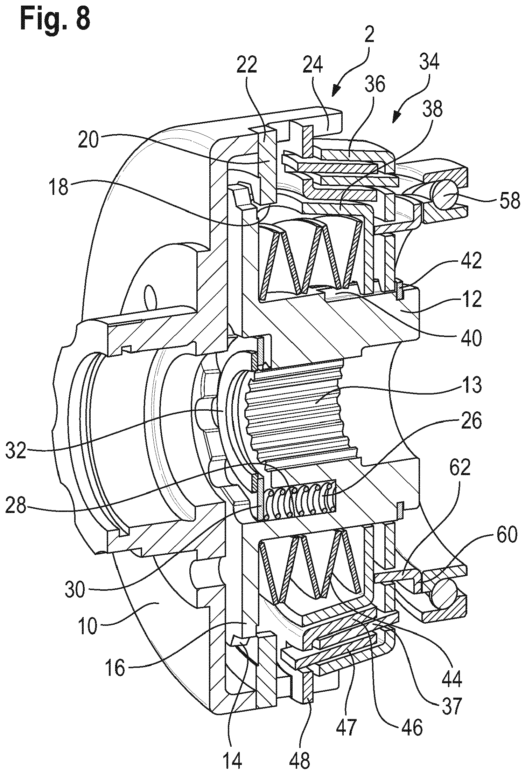

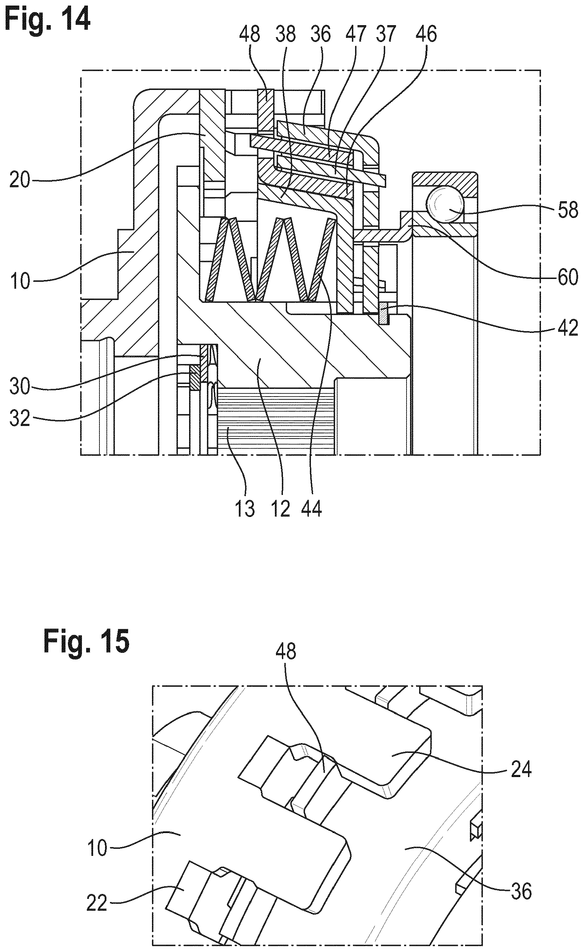

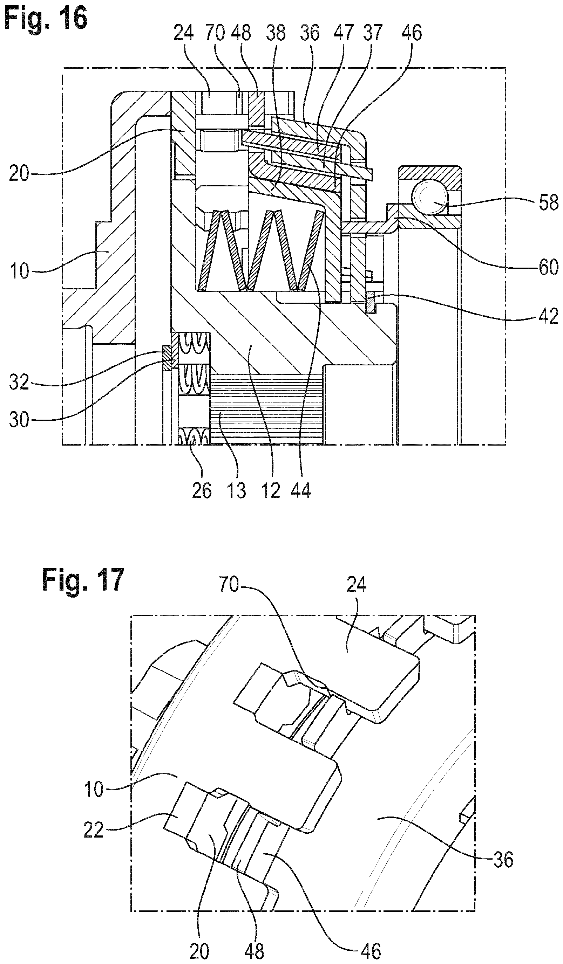

In den Figuren 8 bis 17 ist eine zweite Ausführungsform der Kupplung gezeigt. Für die von der ersten Ausführungsform bekannten Bauteile werden dieselben Bezugszeichen verwendet, und es wird insoweit auf die obigen Erläuterungen verwiesen.

Der Unterschied zwischen der ersten und der zweiten Ausführungsform besteht darin, dass bei der zweiten Ausführungsform eine sogenannte Sperreinrichtung verwendet wird, also auf mechanischem Wege verhindert wird, dass die formschlüssige Verbindung eingelegt wird, bevor die Drehzahlen der beiden Rotationselemente 10, 12 aneinander angeglichen sind.

Eine solche Sperreinrichtung ist grundsätzlich von Handschaltgetrieben für Kraftfahrzeuge bekannt und wird dazu verwendet, die Drehzahl eines Gangrades, das als Losrad ausgeführt ist, mit der Drehzahl der Getriebewelle zu synchronisieren, auf der es angeordnet ist. Hier wird die Sperreinrichtung dazu verwendet zu verhindern, dass der Formschluss (die Klauenkupplung) eingelegt wird, solange die miteinander zu koppelnden Wellen unterschiedliche Drehzahlen haben.

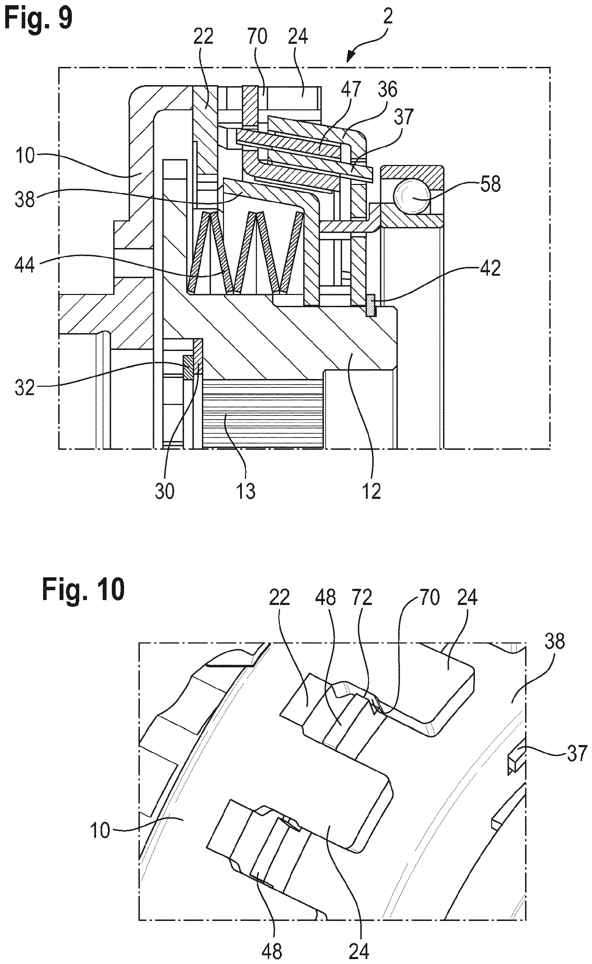

Wie insbesondere in Figur 10 zu sehen ist, ist an den Seitenflächen der Mitnehmerfinger 24 eine Sperrfase 70 vorgesehen, die sich etwa in einem Winkel von 30° relativ zur axialen Richtung erstreckt.

Mit den Sperrfasen 70 kann jeweils eine Blockierfase 72 zusammenwirken, die am Mitnehmervorsprung 48 des Reibrings 46 vorgesehen ist. Der Reibring 46 wirkt daher vergleichbar wie ein Synchronring mit Sperrverzahnung.

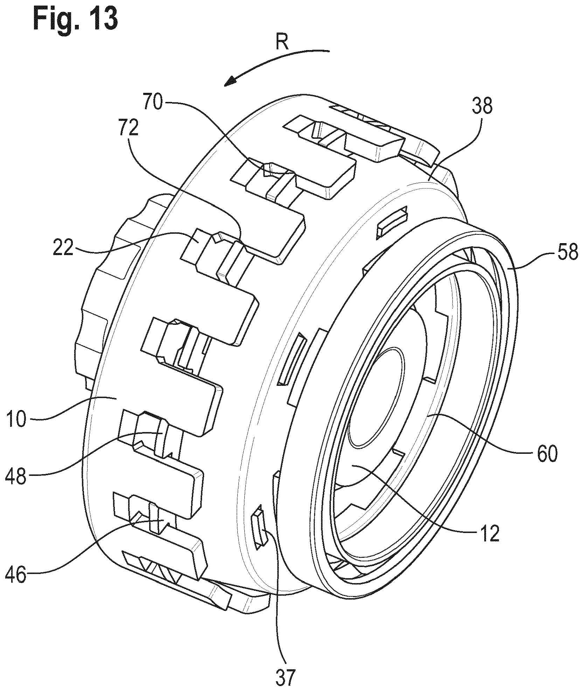

Aufgrund der Position der Sperrfase 70 und der Blockierfase 72 dient die Kupplung 2 bei dieser Ausführungsform dafür, ein Drehmoment vom Kupplungstopf 10 auf die Nabe 12 zu übertragen, wobei sich der Kupplungstopf 10 der Kupplung 2 in der Richtung des Pfeils R von Figur 13 dreht.

Das Öffnen der Kupplung 2 erfolgt in derselben Weise wie bei der ersten Ausführungsform.

In den Figuren 9 und 10 ist die Kupplung 2 in einem vollständig geöffneten Zustand gezeigt.

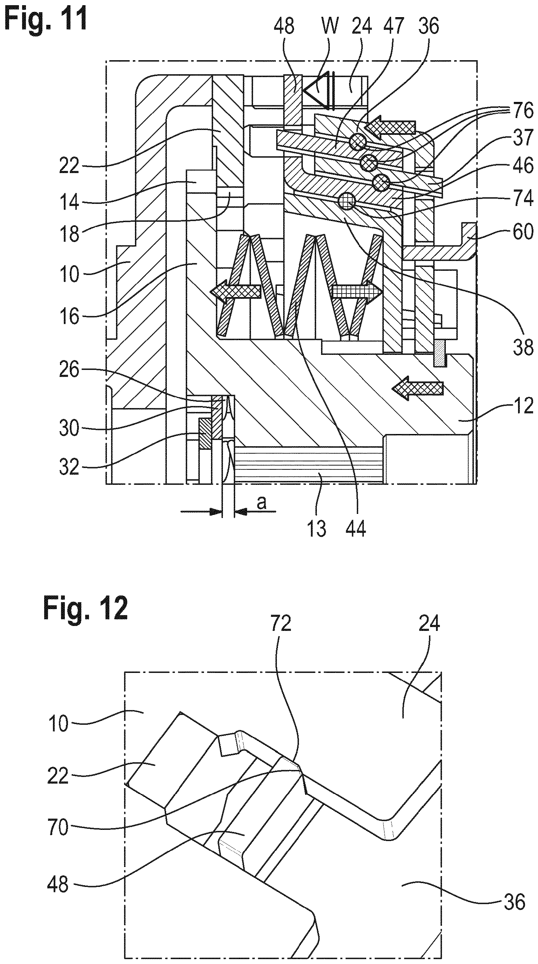

Wenn ausgehend von diesem Zustand die Ausrückkraft auf das Ausrückelement 60 verringert wird, gelangt die Kupplung in den in den Figuren 11 bis 15 gezeigten Zustand.

Aufgrund der Drehrichtung des Kupplungstopfes 10 liegen die Mitnehmervorsprünge 48 des Reibrings 46 mit ihren Blockierfasen 72 an den Sperrfasen der Mitnehmerfinger 24 des Kupplungstopfes 10 an. Unter der Annahme, dass die Drehzahl der Nabe 12 geringer ist als die Drehzahl des Kupplungstopfes 10, wird die Blockierfase 72 gegen die Sperrfase 70 beaufschlagt, sodass abhängig vom Neigungswinkel der beiden Fasen eine Widerstandskraft erzeugt wird, die einer axialen Verstellung des Reibrings 46 entgegenwirkt (siehe die in Figur 11 angedeutete Widerstandskraft W).

Die vom Tellerfedernpaket 44 ausgehende Axialkraft wirkt auf das komplette Reibsystem. D.h. alle Reibringe werden mit der Axialkraft beaufschlagt. Die durch die Sperrgeometrie wirkende Widerstandskraft W (resultierend aus dem wirkendem Drehmoment des Reibsystems) steht der Rückstellkraft der in der Nabe liegenden Druckfedern gegenüber. Da die Widerstandskraft W größer ist als die Federkraft der Druckfedern, wird ein Eindocken der Klauenverzahnungen verhindert. Aufgrund dem vollständigen Reibmoment aus dem Reibpaket kann der Winkel der Sperrfasen relativ flach ausgeführt werden. Nimmt das Reibmoment im Reibsystem ab (z.B. nach dem Drehzahlangleich der Wellen), können die Druckfedern in der Nabe das Reibsystem axial an der Sperrverzahnung (Sperreinrichtung) vorbeischieben und die Klauenverzahnung kann sich beim z.B. Durchrutschen des Reibsystems einlegen.

Der Ablauf ist also bis zur Anlage des Synchronrings an der Sperrfase identisch mit der Ausführungsvariante 1. Der Druck bzw. die Schaltkraft vom Ausrücker wird reduziert. Das Tellerfederpaket schließt das Reibsystem vollständig. Bei weiterer Reduzierung der Axialkraft beginnt das innere Federnpaket (Druckfedern) die Nabe in die Richtung der Klauenverzahnungen zu verschieben. Der Synchronring kommt in Kontakt mit der Sperrfase, und die Bewegung wird gestoppt. Ist der Drehzahlangleich erfolgt und das Reibsystem mit dem Synchronring schlägt z.B. auf die andere Seite um (ohne Sperrfase) kann das innere Federpaket den Ausrücker und das Reibsystem axial an der Sperrfase vorbeischieben. Die Klauen können dann in Folge eines z.B. Durchrutschen des Reibsystems eingelegt werden.

Damit auch die Reibflächen 76 an der Synchronisierung beteiligt werden, sind die Abmessungen der hier beteiligten Bauteile so gewählt, dass dann, wenn die Sperrfase 70 und die Blockierfase 72 miteinander zusammenwirken, die Nabe 12 nicht mehr an der Widerlagerscheibe 30 anliegt, sondern hier ein kleiner Spalt a vorliegt (siehe Figur 11). Dieser Spalt gewährleistet, dass die auf der linken Seite vom Tellerfederpaket auf den Bund 16 ausgeübte Abstützkraft über die Nabe 12 und den Sicherungsring 42 auf die äußere Reibscheibe 36 wirkt, die dann dafür sorgt, dass auch die Reibflächen 72 das zur Synchronisierung nötige Drehmoment übertragen.

Würde kein Spalt a vorliegen könnte sich die Federkraft aus dem Tellerfedernpaket an der Welle bzw. der Wiederlagerscheibe 30 abstützen. Dadurch würde keine Axialkraft mehr auf den Reibring 36 wirken, wodurch das Reibmoment im Reibsystem auf nur eine Reibfläche reduziert wäre (Reibfläche 74 in Fig. 11). Für die Sperrfunktion wird aber bei einer flachen Sperrgeometrie (Fasenwinkel) das vollständige Reibmoment benötigt.

Wenn die Drehzahlen des Kupplungstopfes 10 und der Nabe 12 aneinander angeglichen sind, wird auf den Reibring 46 kein Schleppmoment mehr ausgeübt, sodass auch keine (oder maximal eine vernachlässigbare) Umfangskraft zwischen der Sperrfase 70 und der Blockierfase 72 wirkt. Das Federnpaket der in der Nabe liegenden Druckfedern schiebt das Reibsystem an den Sperrfasen vorbei. Bei der Kompressorkupplung wird davon ausgegangen, dass durch kurzzeitiges Umschlagen der Mitnehmernocke 48 des Synchronrings innerhalb des Trägers 10 auf die gegenüberliegende Seite (ohne Sperrfase) das Federnpaket 26 in der Lage ist, das Reibsystem axial zu verschieben, bis die Klauenverzahnungen aufeinander anliegen oder direkt in Eingriff gebracht werden, also die Nabe 12 in die axiale Position gelangt, in welcher der Formschluss zwischen der Außenverzahnung 14 an der Nabe 12 und der Innenverzahnung 18 des Kupplungstopfes 10 hergestellt ist.

Der Vorteil der zweiten Ausführungsform besteht darin, dass der Druckraum 56 des Ausrückers 50 nicht notwendigerweise kontrolliert entlüftet werden muss, um darüber die gewünschte Synchronisierung der Drehzahlen zu erreichen, sondern dass der Formschluss aufgrund des Vorhandenseins der Sperreinrichtung erst dann erhalten werden kann, wenn die Drehzahlen synchronisiert sind. Es ist daher möglich, den Druckraum 56 schlagartig zu entlasten. Alternativ kann die Sperreinrichtung als Sicherheitsmaßnahme angesehen werden, die das Einlegen der Klauenkupplung auch bei einem plötzlichen Ausfall des Ausrückers 50 erst dann ermöglicht, wenn die Drehzahlen von Kupplungstopf 10 und Nabe 12 angeglichen sind.

Die beschriebene Kupplung 2 ist besonders dafür geeignet, einen Luftkompressor anzutreiben, der bei der Druckluftversorgung eines Bremssystems eines Nutzfahrzeugs angewendet wird. Da die Kupplung als normalerweise geschlossene Kupplung (NC Kupplung) ausgeführt ist, wird bei einem Ausfall des Ausrückers 50 die Kupplung einen Zustand einnehmen, in welchem sowohl die Reibungskupplung 34 geschlossen als auch die Klauenkupplung (gebildet durch die Verzahnungen 14, 18) eingelegt ist. Dieser Zustand würde auch dann eingenommen, wenn die Reibbeläge der Reibungskupplung 34 so weit verschlissen sind, dass sie das gewünschte Drehmoment nicht mehr übertragen können.

Abhängig von konstruktiven Rahmenbedingungen kann die Reibungskupplung 34 so dimensioniert sein, dass sie lediglich das Nenndrehmoment überträgt, während dynamische Lastspitzen über die Klauenkupplung übertragen werden. Alternativ kann die Reibungskupplung 34 auch so dimensioniert werden, dass auch das vollständige Lastmomentenspektrum des anzutreibenden Aggregats übertragen werden kann.

Die Reibungskupplung 34 kann auch so dimensioniert sein, dass sie lediglich das Drehmoment zum Synchronisieren des anzutreibenden Aggregats bei Betriebsdrehzahl übertragen kann, während dann im Betrieb auftretende dynamische Nennmomente des Aggregats über die Klauenkupplung übertragen werden müssen.

Es kann vorgesehen sein, dass in einem Fehlerfall ein Ventil, das zur Betätigung des Ausrückers 50 dient, in eine Schaltstellung gebracht wird, in der der Ausrücker 50 gar nicht mehr angesteuert werden kann. In diesem Fall würde die Kupplung 2 permanent im geschlossenen Zustand verbleiben, was einem Zustand mit maximaler Betriebssicherheit entspricht.

Zwischen den Verzahnungen 14, 18 kann in Umfangsrichtung ein Spiel vorgesehen sein, das größer ist als das Spiel in der Reibungskupplung 34. Dies führt dazu, dass spielbehaftete Schläge in der Klauenkupplung durch den Reibschluss der Reibungskupplung 34 reduziert werden. Alternativ kann vorgesehen sein, dass das Spiel der Klauenkupplung kleiner oder gleich dem Spiel in der Reibungskupplung 34 ist. Dies führt dazu, dass die formschlüssige Verbindung den Mikroschlupf im Reibsystem bei dynamischen Überlasten verringert.

Es ist auch möglich, die Klauenkupplung spielfrei auszuführen, was besonders günstig für die Kopplung von Aggregaten mit sehr starker Schwingungsanregung ist.

## Patentansprüche

1. Normalerweise geschlossene Kupplung (2) mit einem ersten Rotationselement (10) und einem zweiten Rotationselement (12), das relativ zum ersten Rotationselement (10) in axialer Richtung verschiebbar ist zwischen einer eingekuppelten und einer ausgekuppelten Stellung, wobei eine erste Federeinrichtung (26) vorgesehen ist, die das zweite Rotationselement (12) mit einer ersten Federkraft in die eingekuppelte Stellung beaufschlagt, in der eine formschlüssig Verbindung zwischen den beiden Rotationselementen (10, 12) besteht, wobei eine Reibungskupplung (34) und eine dieser zugeordnete zweite Federeinrichtung (44) vorgesehen sind, wobei die zweite Federeinrichtung (44) die Reibungskupplung (34) mit einer zweiten Federkraft in eine geschlossenen Stellung beaufschlagt, wobei die zweite Federkraft größer ist als die erste Federkraft, wobei ein Ausrückelement (60) vorgesehen ist, mit dem die Reibungskupplung (34) geöffnet werden kann, und wobei das Ausrückelement (60) so angeordnet ist, dass die erste Federeinrichtung (26), das zweite Rotationselement (12), die zweite Federeinrichtung (44) und das Ausrückelement (60) in Reihe geschaltet sind.

2. Kupplung nach Anspruch 1, **dadurch gekennzeichnet, dass** die formschlüssige Verbindung durch eine Klauenkupplung (14, 18) gebildet ist.

3. Kupplung nach Anspruch 2, **dadurch gekennzeichnet, dass** die Klauenkupplung eine Innenverzahnung (18) an einem der Rotationselemente (10) und eine komplementäre Außenverzahnung (14) am anderen Rotationselement (12) aufweist.

4. Kupplung nach einem der vorhergehenden Ansprüche, **dadurch gekennzeichnet, dass** die erste Federeinrichtung durch mehrere Spiralfedern (26) gebildet ist.

5. Kupplung nach einem der vorhergehenden Ansprüche, **dadurch gekennzeichnet, dass** die zweite Federeinrichtung durch ein Tellerfederpaket (44) gebildet ist.

6. Kupplung nach einem der vorhergehenden Ansprüche, **dadurch gekennzeichnet, dass** die Reibungskupplung (34) mindestens eine konische Reibfläche (74, 76) aufweist.

7. Kupplung nach einem der vorhergehenden Ansprüche, **dadurch gekennzeichnet, dass** die Reibungskupplung (34) ein Mehrflächen-Reibsystem enthält.

8. Kupplung nach einem der vorhergehenden Ansprüche, **dadurch gekennzeichnet, dass** die Reibungskupplung (34) eine Sperreinrichtung (60, 62) enthält.

9. Kupplung nach Anspruch 8, **dadurch gekennzeichnet, dass** die Reibungskupplung (34) einen Synchronring (46) mit einer Blockierfase (62) enthält, die mit einer Sperrfase (60) an einem der Rotationselemente (10) zusammenwirken kann.

10. Kupplung nach einem der vorhergehenden Ansprüche, **dadurch gekennzeichnet, dass** dem Ausrückelement (60) ein Stellkolben (54) zugeordnet ist, der zusammen mit einem Ausrückergehäuse (52) einen Ausrücker (50) bildet.

11. Kupplung nach einem der vorhergehenden Ansprüche, **dadurch gekennzeichnet, dass** eines der Rotationselemente ein Kupplungstopf (10) ist, der mit sich axial erstreckenden (24) Mitnehmerfingern versehen ist, wobei zwischen den Mitnehmerfingern (24) eine Zahnscheibe (20) aufgenommen ist, die Teil der formschlüssigen Verbindung ist, und wobei zwischen die Mitnehmerfinger (24) mehrere Mitnehmervorsprünge (48) eines Reibrings (46) der Reibungskupplung (34) eingreifen.

12. Kupplung nach Anspruch 11, **dadurch gekennzeichnet, dass** eines der Rotationselemente (12) eine Nabe ist, auf der drehfest, aber axial relativ zueinander verstellbar eine äußere Reibscheibe (36) und eine innere Reibscheibe (38) aufgenommen sind, zwischen denen der Reibring (46) eingreift.

13. Kupplung nach Anspruch 12, **dadurch gekennzeichnet, dass** die zweite Federeinrichtung (44) zwischen der Nabe (12) und der inneren Reibscheibe (38) wirksam ist.

14. Kupplung nach einem der Ansprüche 12 und 13, **dadurch gekennzeichnet, dass** sich die erste Federeinrichtung (26) an der Nabe (12) abstützt.

15. Kupplung nach einem der Ansprüche 12 bis 14, **dadurch gekennzeichnet, dass** eine Welle (4) vorgesehen ist, auf der die Nabe (12) axial verschiebbar, aber drehfest angeordnet ist, wobei auf der Welle (4) ein Widerlager (30, 32) für die erste Federeinrichtung (26) angeordnet ist.

16. Kupplung nach Anspruch 15, **dadurch gekennzeichnet, dass** ein Ausrücker (50) im Gehäuse in axialer Richtung feststehend angeordnet ist.

17. Kupplung nach einem der Ansprüche 11 bis 16, **dadurch gekennzeichnet, dass** der Kupplungstopf (10) mittels eines Wälzlagers (8) drehbar auf der Welle (4) gelagert ist.

## Claims

1. A normally closed clutch (2) comprising a first rotary element (10) and a second rotary element (12) which is displaceable in the axial direction relative to the first rotary element (10) between an engaged position and a disengaged position, wherein a first spring device (26) is provided which, by applying a first spring force, urges the second rotary element (12) into the engaged position, in which a form-locking connection exists between the two rotary elements (10, 12), wherein a friction clutch (34) and a second spring device (44) associated therewith are provided, wherein the second spring device (44) urges the friction clutch (34) into a closed position by applying a second spring force, the second spring force being greater than the first spring force, wherein a release member (60) is provided by means of which the friction clutch (34) can be opened, and wherein the release member (60) is arranged such that the first spring device (26), the second rotary member (12), the second spring device (44) and the release member (60) are connected in series.

2. The clutch according to claim 1, **characterized in that** the form-locking connection is formed by a claw clutch (14, 18).

3. The clutch according to claim 2, **characterized in that** the claw clutch has an internal toothing (18) on one of the rotary elements (10) and a complementary external toothing (14) on the other rotary element (12).

4. The clutch according to any of the preceding claims, **characterized in that** the first spring device is formed by a plurality of coil springs (26).

5. The clutch according to any of the preceding claims, **characterized in that** the second spring device is formed by a disk spring assembly (44).

6. The clutch according to any of the preceding claims, **characterized in that** the friction clutch (34) has at least one conical friction surface (74, 76).

7. The clutch according to any of the preceding claims, **characterized in that** the friction clutch (34) includes a multi-surface friction system.

8. The clutch according to any of the preceding claims, **characterized in that** the friction clutch (34) includes a locking means (60, 62).

9. The clutch according to claim 8, **characterized in that** the friction clutch (34) includes a synchronizer ring (46) having a blocking chamfer (62) that is adapted to cooperate with a locking chamfer (60) on one of the rotary elements (10).

10. The clutch according to any of the preceding claims, **characterized in that** the release member (60) has a positioning piston (54) associated with it, which together with a release housing (52) forms a release unit (50).

11. The clutch according to any of the preceding claims, **characterized in that** one of the rotary elements is a clutch pot (10) provided with axially extending (24) driver fingers, wherein a toothed disk (20) is received between the driver fingers (24) which is part of the form-locking connection, and wherein a plurality of driver projections (48) of a friction ring (46) of the friction clutch (34) engage between the driver fingers (24).

12. The clutch according to claim 11, **characterized in that** one of the rotary elements (12) is a hub on which an outer friction disk (36) and an inner friction disk (38) are received so as to prevent relative rotation, but to be axially displaceable relative to each other, between which the friction ring (46) engages.

13. The clutch according to claim 12, **characterized in that** the second spring device (44) is effective between the hub (12) and the inner friction disk (38).

14. The clutch according to either of claims 12 and 13, **characterized in that** the first spring device (26) supports itself against the hub (12).

15. The clutch according to any of claims 12 to 14, **characterized in that** a shaft (4) is provided on which the hub (12) is arranged for axial displacement but so as to prevent relative rotation, an abutment (30, 32) for the first spring device (26) being arranged on the shaft (4).

16. The clutch according to claim 15, **characterized in that** a release unit (50) is arranged in the housing so as to be fixed in the axial direction.

17. The clutch according to any of claims 11 to 16, **characterized in that** the clutch pot (10) is mounted for rotation on the shaft (4) by means of a rolling bearing (8).

## Revendications

1. Embrayage (2) normalement fermé, comprenant un premier élément rotatif (10) et un deuxième élément rotatif (12) qui est apte à être déplacé dans le sens axial par rapport au premier élément rotatif (10) entre une position engagée et une position désengagée, un premier moyen à ressort (26) étant prévu, lequel sollicite le deuxième élément rotatif (12) avec une première force de ressort dans la position engagée dans laquelle les deux éléments rotatifs (10, 12) sont reliés par coopération de formes, un embrayage à friction (34) et un deuxième moyen à ressort (44) associé à celui-ci étant prévus, le deuxième moyen à ressort (44) sollicitant l'embrayage à friction (34) avec une deuxième force de ressort dans une position fermée, la deuxième force de ressort étant supérieure à la première force de ressort, un élément de débrayage (60) au moyen duquel l'embrayage à friction (34) peut être ouvert étant prévu, et l'élément de débrayage (60) étant agencé de sorte que le premier moyen à ressort (26), le deuxième élément rotatif (12), le deuxième moyen à ressort (44) et l'élément de débrayage (60) sont couplés en série.

2. Embrayage selon la revendication 1, **caractérisé en ce que** la liaison par coopération de formes est réalisée par un crabotage (14, 18).

3. Embrayage selon la revendication 2, **caractérisé en ce que** le crabotage présente une denture intérieure (18) sur l'un des éléments rotatifs (10) et une denture extérieure complémentaire (14) sur l'autre élément rotatif (12).

4. Embrayage selon l'une des revendications précédentes, **caractérisé en ce que** le premier moyen à ressort est réalisé par une pluralité de ressorts à boudin (26).

5. Embrayage selon l'une des revendications précédentes, **caractérisé en ce que** le deuxième moyen à ressort est réalisé par un bloc de ressorts à disques (44).

6. Embrayage selon l'une des revendications précédentes, **caractérisé en ce que** l'embrayage à friction (34) présente au moins une surface de friction conique (74, 76).

7. Embrayage selon l'une des revendications précédentes, **caractérisé en ce que** l'embrayage à friction (34) comporte un système à friction à plusieurs surfaces.

8. Embrayage selon l'une des revendications précédentes, **caractérisé en ce que** l'embrayage à friction (34) comporte un moyen d'arrêt (60, 62).

9. Embrayage selon la revendication 8, **caractérisé en ce que** l'embrayage à friction (34) comporte une bague de synchronisation (46) qui présente un chanfrein de blocage (62) apte à coopérer avec un chanfrein d'arrêt (60) sur l'un des éléments rotatifs (10).

10. Embrayage selon l'une des revendications précédentes, **caractérisé en ce qu'**un piston de réglage (54) qui, ensemble avec un boîtier (52) de dispositif de débrayage, forme un dispositif de débrayage (50), est associé à l'élément de débrayage (60).

11. Embrayage selon l'une des revendications précédentes, **caractérisé en ce que** l'un des éléments rotatifs est un pot d'embrayage (10) qui est pourvu de doigts d'entraînement (24) qui s'étendent de manière axiale, une rondelle à denture (20) qui fait partie de la liaison par coopération de formes étant reçue entre les doigts d'entraînement (24), et une pluralité de saillies d'entraînement (48) d'une bague de friction (46) de l'embrayage à friction (34) s'engageant entre les doigts d'entraînement (24).

12. Embrayage selon la revendication 11, **caractérisé en ce que** l'un des éléments rotatifs (12) est un moyeu sur lequel un disque de friction (36) extérieur et un disque de friction intérieur (38) sont reçus qui sont solidaires en rotation, mais axialement déplaçables l'un par rapport à l'autre et entre lesquels la bague de friction (46) s'engage.

13. Embrayage selon la revendication 12, **caractérisé en ce que** le deuxième moyen à ressort (44) est actif entre le moyeu (12) et le disque de friction intérieur (38).

14. Embrayage selon l'une des revendications 12 et 13, **caractérisé en ce que** le premier moyen à ressort (26) prend appui sur le moyeu (12).

15. Embrayage selon l'une des revendications 12 à 14, **caractérisé en ce qu'**il est prévu un arbre (4) sur lequel le moyeu (12) est agencé de manière axialement déplaçable, mais solidaires en rotation, un aboutement (30, 32) pour le premier moyen à ressort (26) étant agencé sur l'arbre (4).

16. Embrayage selon la revendication 15, **caractérisé en ce qu'**un dispositif de débrayage (50) est agencé dans le boîtier de manière fixe dans le sens axial.

17. Embrayage selon l'une des revendications 11 à 16, **caractérisé en ce que** le pot d'embrayage (10) est monté mobile en rotation sur l'arbre (4) au moyen d'un palier à roulement (8).
